# EUROPEAN PATENT APPLICATION

(11) **EP 4 579 929 A1**
(43) Date of publication of application: **02.07.2025**
(21) Application number: 22963313.6
(22) Date of filing: 08.12.2022
(51) Int. Cl.: H01M 50/531, H01M 50/147, H01M 10/04

(54) **BATTERY CELL, BATTERY, AND ELECTRICAL DEVICE**

(30) Priority: 27.10.2022 CN 202222835202 U
(71) Applicant: CONTEMPORARY AMPEREX TECHNOLOGY (HONG KONG) LIMITED, Central (HK)
(72) Inventor: ZHANG, Qianqian, Ningde, Fujian 352100 (CN); XU, Liangfan, Ningde, Fujian 352100 (CN); ZHOU, Wenlin, Ningde, Fujian 352100 (CN); LI, Xing, Ningde, Fujian 352100 (CN); JIN, Haizu, Ningde, Fujian 352100 (CN)
(74) Representative: Ziebig Hengelhaupt Intellectual Property Attorneys Patentanwaltskanzlei PartGmbB
(86) International application number: PCT/CN2022/137526
(87) International publication number: WO 2024/087335

(57) **Abstract**

This application relates to a battery cell, a battery, and an electric device. The battery cell includes an end cover assembly (21), a tab bracket (22), a fixing member (23), a housing (24), and an electrode assembly (25). The housing (24) has an opening. The end cover assembly (21) closes the opening of the housing (24). The electrode assembly (25) is provided in the housing (24) and provided with a tab (251). The tab bracket (22) is provided on a side of the end cover assembly (21) facing the electrode assembly (25), where the tab (251) is bent around the tab bracket (22). The fixing member (23) is configured to fix the tab bracket (22) to the end cover assembly (21).

## Description

### CROSS REFERENCE TO RELATED APPLICATIONS

This application claims priority to Chinese Patent Application No. 2022228352020, filed on October 27, 2022 and entitled "BATTERY CELL, BATTERY, AND ELECTRIC DEVICE", which is incorporated herein by reference in its entirety.

### TECHNICAL FIELD

This application relates to the field of battery technologies, and in particular, to a battery cell, a battery, and an electric device.

### BACKGROUND

Energy saving and emission reduction are crucial to the sustainable development of the automobile industry. Electric vehicles, with their advantages in energy conservation and emission reduction, have become an important part of sustainable development of the automobile industry. For electric vehicles, battery technology is an important factor in connection with their development.

A secondary battery includes positive and negative electrode plates with tabs. In the manufacturing process, to save installation space inside the secondary battery and facilitate the assembling of the secondary battery, tabs are typically bent, and the bent portions of the tabs are clamped by the tab bracket, so as to facilitate the shaping of the tabs or to support the tabs.

However, the position of the tab bracket inside the battery is unstable and prone to displacement, which affects the effect of shaping or supporting the bent portions of the tabs, thus compromising the safety performance and cycle life of the battery.

### SUMMARY

In view of this, it is necessary to provide a battery cell, a battery, and an electric device that can effectively improve the stability of the tab bracket and prevent loosening or displacement of the tab bracket inside the battery, in response to the problem of the unstable position of the tab bracket inside the battery.

A battery cell includes a housing, an end cover assembly, an electrode assembly, a tab bracket, and a fixing member, where the end cover assembly closes an opening of the housing, the tab bracket is provided on a side of the electrode assembly facing the end cover assembly, the tab is bent around the tab bracket, and the fixing member is configured to fix the tab bracket to the end cover assembly.

With such arrangement, in the battery cell provided in this application, the tab bracket is fixed to the end cover assembly of the battery cell. The fixing effect provided by the end cover assembly pulling on the tab bracket allows the tab bracket to remain stable in the initial assembly position when the battery is inverted or the battery is subjected to stress. This prevents loosening or displacement of the tab bracket inside the battery, and allows the tab bracket to play the role of shaping and supporting the tab, thus improving the safety performance and cycle life of the battery.

In some embodiments, the end cover assembly includes an end cover and an adapter member, where the end cover has an electrode terminal electrically connected to the tab, the adapter member is provided between the end cover and the tab bracket and configured to electrically interconnect the electrode terminal and the tab, and the fixing member is configured to fix the tab bracket to the end cover.

Arrangement of the adapter member improves the safety of the battery cell. Moreover, the tab bracket is fixed to the adapter member via the fixing member, avoiding problems such as deformation of the tab caused by displacement of the tab bracket, as well as the resulting impact on the electrical connection between the tab and the electrode terminal.

In some embodiments, the fixing member is layered between the tab bracket and the adapter member, to prevent the arrangement of the fixing member from taking up space in other directions inside the battery cell. It is only necessary to consider increasing the thickness in the direction where the tab bracket and the adapter member are layered, achieving high space utilization and compact structure inside the battery cell.

In some embodiments, the adapter member includes a first adapter portion and a second adapter portion electrically connected to each other, where the first adapter portion is configured to be electrically connected to the electrode terminal, the second adapter is configured to be electrically connected to the tab, and the fixing member is provided between the first adapter portion and the tab bracket or between the second adapter portion and the tab bracket.

In some embodiments, the adapter member includes a first adapter portion and a second adapter portion electrically connected to each other, where the first adapter portion is configured to be electrically connected to the electrode terminal, the second adapter is configured to be electrically connected to the tab, and the fixing member is provided between the first adapter portion and the tab bracket and between the second adapter portion and the tab bracket.

In this way, the fixing member can be arranged more flexibly according to the adapter structure of the adapter member, ensuring the interconnecting function of the adapter member while fixing the tab bracket to the adapter member.

In some embodiments, the fixing member is an adhesive layer. With the adhesive layer provided, the tab bracket can be adhered to the end cover assembly, improving the stability of the tab bracket. Moreover, the adhesive layer is a non-metallic member, and will not cause short circuit or the like with other electrical components, making the battery cell much safer.

In some embodiments, the adapter member is welded to the electrode terminal, and an orthographic projection of the fixing member on the adapter member covers a welding position between the adapter member and the electrode terminal.

With the fixing member provided between the tab bracket and the adapter member, the side of the adapter member away from the tab bracket is welded to the electrode terminal, so that after metal particles are generated by the welding of the tab bracket and the motor terminal, the metal particles falling toward the interior of the battery first pass through the fixing member, and thus will be intercepted by the adhesive layer formed by the fixing member, preventing the metal particles from further falling into the battery.

In some embodiments, the tab bracket is provided with an accommodating hole, and at least a portion of the adhesive layer is located within the accommodating hole.

With the adhesive layer partially located inside the tab bracket, the thickness in the direction where the tab bracket and the adapter member are layered is reduced, thus reducing the internal space occupation of the battery cell, achieving high space utilization of the battery cell, and improving the wetting effect on the electrode plate.

In some embodiments, an opening area of the accommodating hole is denoted as A, area of the weld mark produced at the welding position between the adapter member and the electrode terminal is denoted as B, and a ratio of A to B ranges from 1/2 to 2/3. In this case, the adhesive layer provided inside the accommodating hole partially overflows to outside the accommodating hole and connects to one side surface of the tab bracket. This guarantees fixation of the tab bracket and improves the wetting effect of the electrode plate without occupying too much internal space of the battery cell, thus ensuring sufficient space for the electrode assembly and electrolyte inside the housing to avoid reducing the energy density of the battery cell.

In some embodiments, the end cover assembly includes an end cover, where the end cover has an electrode terminal electrically connected to the tab, and the fixing member is configured to fix the tab bracket to the end cover of the end cover assembly.

Fixing the tab bracket to the end cover ensures the stability of the electrical connection between the tab and the electrode terminal. Additionally, such arrangement ensures fixation of the tab bracket through the end cover, avoiding problems such as deformation of the tab caused by displacement of the tab bracket, as well as the resulting impact on the electrical connection between the tab and the electrode terminal.

**In** some embodiments, the end cover assembly includes an end cover and an insulating member, where the end cover is provided with an electrode terminal, the insulating member is provided between the end cover and the tab, and the fixing member is configured to fix the tab bracket to the insulating member. The fixing member is connected to the insulating member so as to realize its connection with the end cover. This can avoid problems such as deformation of the tab caused by displacement of the tab bracket, thus preventing the further impact on the electrical connection between the tab and the electrode terminal. Additionally, such arrangement can prevent the end cover with the electrode terminal provided thereon from being directly connected to the tab bracket, thus reducing the risk of the fixing member interfering with the electrode terminal.

In some embodiments, the fixing member is an adhesive layer.
In some embodiments, thickness of the adhesive layer ranges from 0.05 mm to 7 mm. When the thickness of the adhesive layer is less than 0.05 mm, the adhesive layer is too thin with too little adhesive, resulting in a weak connection and fixation of the tab bracket. When the thickness of the adhesive layer is greater than 7 mm, the adhesive layer is too thick, occupying too much internal space of the battery cell, which not only affects the arrangement of the electrode assembly, but also may affect the normal bending of the tab.

According to a second aspect of this application, a battery is provided, including the battery cell in the foregoing embodiments.

According to a third aspect of this application, an electric device is provided, including the battery according to any one of the foregoing embodiments, where the battery is configured to supply electric energy.

Details of one or more embodiments of this application are presented in the accompanying drawings and description below. Other features, purposes, and advantages of this application will become apparent from the specification, the accompanying drawings, and the claims.

### BRIEF DESCRIPTION OF DRAWINGS

To describe the technical solutions in the embodiments of this application or in the conventional art more clearly, the following briefly describes the accompanying drawings required for describing the embodiments or conventional art. Apparently, the accompanying drawings in the following description show merely embodiments of this application, and persons of ordinary skill in the art may still derive other drawings from the disclosed accompanying drawings without creative efforts.
FIG. 1 is a schematic structural diagram of a vehicle according to some embodiments of this application;
FIG. 2 is an exploded view of a structure of a battery according to some embodiments of this application;
FIG. 3 is a structural exploded view of a battery cell according to some embodiments of this application;
FIG. 4 is a schematic cross-sectional view of an end cover assembly according to some embodiments of this application;
FIG. 5 is a schematic cross-sectional view of an end cover assembly according to some embodiments of this application;
FIG. 6 is a partially enlarged schematic view of the end cover assembly provided in FIG. 4;
FIG. 7 is a partially enlarged schematic view of the end cover assembly provided in FIG. 5;
FIG. 8 is a first schematic partial cross-sectional view of an end cover assembly according to some embodiments of this application; and

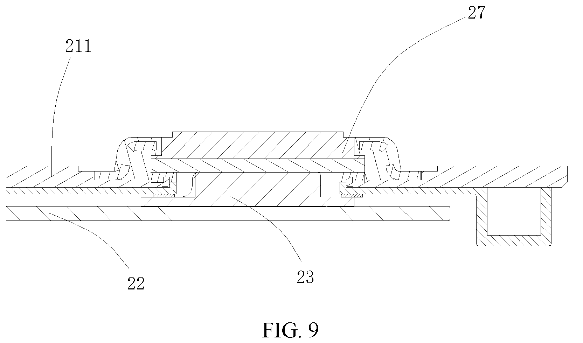

FIG. 9 is a second schematic partial cross-sectional view of an end cover assembly according to some embodiments of this application.
   1000. vehicle; 100. battery; 200. controller; 300. motor; 10. box; 11. first portion; 12. second portion; 20. battery cell; 21. end cover assembly; 211. end cover; 211a. injection hole; 212. adapter member; 212a. first adapter portion; 212b. second adapter portion; 212c. welding position; 22. tab bracket; 22a. accommodating hole; 23. fixing member; 24. housing; 25. electrode assembly; 251. tab; 26. pressure relief mechanism; and 27. electrode terminal.

### DESCRIPTION OF EMBODIMENTS

The following clearly and completely describes the technical solutions in the embodiments of this application with reference to the accompanying drawings in the embodiments of this application. Apparently, the described embodiments are merely some but not all embodiments of this application. All other embodiments obtained by a person of ordinary skill in the art based on the embodiments of this application without creative efforts shall fall within the protection scope of this application.

Currently, from a perspective of the market development, application of traction batteries is being more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With continuous expansion of application fields of traction batteries, market demands for the traction batteries are also expanding.

In the production process of a power battery, an electrode assembly is formed by winding the stacked positive electrode plate, separator, and negative electrode plate. The positive and negative electrode plates are divided into a coated portion and an uncoated portion, wherein the coated portion is coated with an active substance, and the uncoated portion forms the tab. **In** addition, to save the mounting space in the secondary battery and facilitate the assembling of the secondary battery, the tab is typically bent, and a tab bracket is disposed to allow the tab to bend around the tab bracket, so that the tab is formed into a bent portion and is supported by the tab bracket, facilitating the shaping of the tab or supporting the tab.

The applicant has noticed that after the tab bracket is clamped to the bent portion of the tab, the tab bracket is not fixed, and its position inside the battery cell is not stable. When the battery is inverted or vibrates due to stress, the tab bracket is prone to displacement, which affects the effect of shaping or supporting the bent portions of the tabs, thus compromising the safety performance and cycle life of the battery.

In view of this, to improve the stability of the tab bracket and prevent the tab bracket from loosening or moving inside the battery, the applicant has designed an end cover assembly after in-depth research. The tab bracket is fixed to the end cover assembly of the battery cell. The fixing effect provided by the end cover assembly pulling on the tab bracket allows the tab bracket to remain stable in the initial assembly position when the battery is inverted or the battery is subjected to stress. This prevents loosening or displacement of the tab bracket inside the battery, and allows the tab bracket to play the role of shaping and supporting the tab, thus improving the safety performance and cycle life of the battery.

The battery cell disclosed in the embodiments of this application may be used without limitation in electric apparatuses such as vehicles, ships, or aircrafts. The battery cell, battery, and the like disclosed in this application may be used to constitute a power supply system of that electric apparatus.

For ease of description, the electric apparatus of an embodiment of this application being a vehicle 1000 is used as an example for description of the following embodiments.

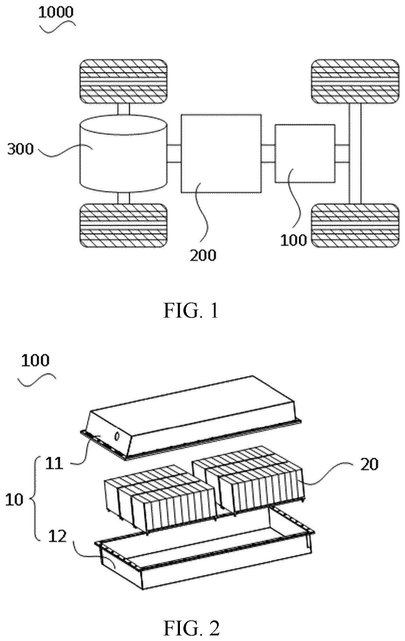

Refer to FIG. 1. FIG. 1 is a schematic structural diagram of a vehicle 1000 according to some embodiments of this application. The vehicle 1000 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1000 is provided with a battery 100 inside, and the battery 100 may be provided at the bottom or head or tail of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

Referring to FIG. 2, FIG. 2 is an exploded view of a battery 100 according to some embodiments of this application. The battery 100 includes a box 10 and a battery cell 20, where the battery cell 20 is accommodated in the box 10. The box 10 is configured to provide an accommodating space for the battery cell 20. The box 10 may be a variety of structures. In some embodiments, the box 10 may include a first portion 11 and a second portion 12. The first portion 11 and the second portion 12 fit together so that the first portion 11 and the second portion 12 jointly define a space for accommodating the battery cell 20. The second portion 12 may be a hollow structure with one end open, and the first portion 11 may be a plate structure, where the first portion 11 covers the open side of the second portion 12 for the first portion 11 and the second portion 12 to jointly define an accommodating space; or the first portion 11 and the second portion 12 may both be hollow structures with one side open, where the open side of the first portion 11 is engaged with the open side of the second portion 12. Certainly, the box 10 formed by the first portion 11 and the second portion 12 may be of a variety of shapes, for example, cylinder or cuboid.

In the battery 100, a plurality of battery cells 20 may be provided, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety of the plurality of battery cells 20 is accommodated in the box 10; or certainly, the battery 100 may be formed by a plurality of battery cells 20 connected in series, parallel, or series-parallel first to form a battery module and then a plurality of battery modules being connected in series, parallel, or series-parallel to form an entirety which is accommodated in the box 10. The battery 100 may further include other structures. For example, the battery 100 may further include a busbar configured to implement electrical connection between the plurality of battery cells 20.

Each battery cell 20 may be a secondary battery or a primary battery, and may be a lithium-sulfur battery, a sodium-ion battery, or a magnesium-ion battery, without being limited thereto. The battery cell 20 may be cylindrical, flat, cuboid, or of other shapes.

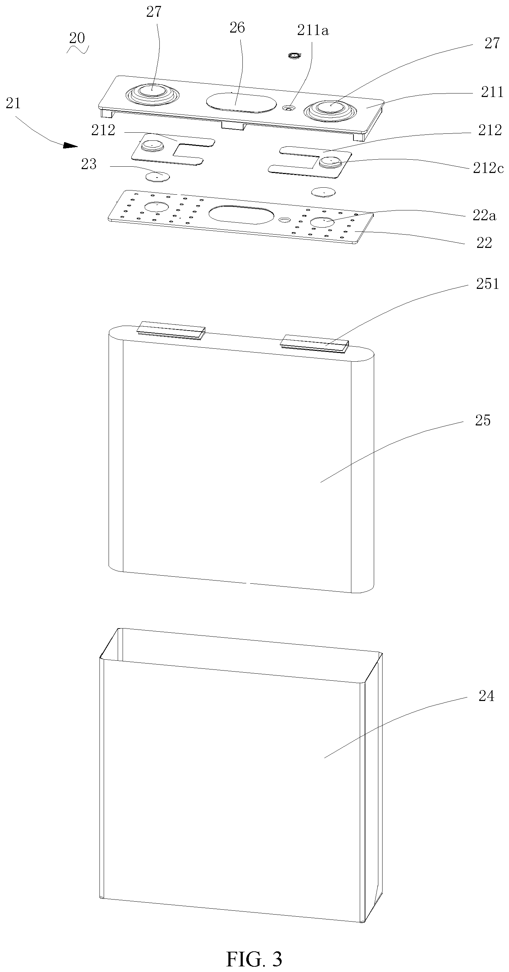

Referring to FIG. 3, FIG. 3 is a schematic structural exploded view of a battery cell 20 according to some embodiments of this application. The battery cell 20 refers to a smallest unit constituting a battery. As shown in FIG. 3, the battery cell 20 includes an end cover assembly 21, a housing 24, an electrode assembly 25, and other functional components.

The end cover assembly 21 refers to a component that covers an opening of the housing 24 to isolate an internal environment of the battery cell 20 from an external environment. Without limitation, the shape of the end cover assembly 21 may be adapted to the shape of the housing 24 to fit the housing 24, and the end cover assembly 21 may be welded to an edge of the housing 24 that has an opening, so as to achieve a sealing of the battery cell 20. The end cover assembly 21 may be made of a material with specified hardness and strength (for example, aluminum alloy), so that the end cover assembly 21 is less likely to deform when subjected to extrusion and collision, enabling the battery cell 20 to have higher structural strength and improved safety performance. The end cover assembly 21 may be provided with functional components such as an electrode terminal. The electrode terminal may be configured to be electrically connected to the electrode assembly 25 for outputting or inputting electric energy of the battery cell 20. **In** some embodiments, the end cover assembly 21 may be further provided with a pressure relief mechanism 26 for releasing internal pressure when the internal pressure or a temperature of the battery cell 20 reaches a threshold. The end cover assembly 21 may also be made of various materials, such as copper, iron, aluminum, stainless steel, aluminum alloy, and plastic, which are not particularly limited in the embodiments of this application. **In** some embodiments, an insulator may also be provided at an inner side of the end cover assembly 21. The insulator may be configured to isolate an electrically connected component in the housing 24 from the end cover assembly 21 to reduce the risk of short circuit. For example, the insulator may be made of plastic, rubber, or the like.

The housing 24 is an assembly configured to cooperate with the end cover assembly 21 to form an internal environment of the battery cell 20, where the formed internal environment can be used to accommodate the electrode assembly 25, an electrolyte, and other components. The end cover assembly 21 is provided with an injection hole 211a, where the injection hole 211a is configured for injecting electrolyte into the battery cell 20. The housing 24 and the end cover assembly 21 may be independent components, an opening may be formed in the housing 24, and the end cover assembly 21 covers the opening to form the internal environment of the battery cell 20. Without limitation, the end cover assembly 21 and the housing 24 may alternatively be integrated. Specifically, the end cover assembly 21 and the housing 24 may form a shared connection surface before other components are disposed in the housing and then, the end cover assembly 21 covers the housing 24 when inside of the housing 24 needs to be enclosed. The housing 24 may be of various shapes and sizes, such as a cuboid shape, a cylindrical shape, and a hexagonal prism shape. Specifically, a shape of the housing 24 may be determined according to a specific shape and size of the electrode assembly 25. The housing 24 may be made of various materials, such as copper, iron, aluminum, stainless steel, aluminum alloy, and plastic, which are not particularly limited in the embodiments of this application.

The electrode assembly 25 is a component in the battery cell 20 in which electrochemical reactions take place. The housing 24 may include one or more electrode assemblies 25. The electrode assembly 25 is mainly formed by winding or stacking an anode electrode plate and a cathode electrode plate, and a separator is generally provided between the anode electrode plate and the cathode electrode plate. The portions of the anode electrode plate and the cathode electrode plate with active substances constitute a main body portion of the electrode assembly, and the portions of the anode electrode plate and the cathode electrode plate without active substances each constitute a tab. An anode tab and a cathode tab may both be located at one end of the main body portion or be located at two ends of the main body portion respectively. During charge and discharge of the battery, an anode electrode active substance and a cathode electrode active substance react with an electrolyte, and the tab is connected to the electrode terminal to form a current loop.

According to some embodiments of this application, referring to FIGs. 3 to 5, this application provides a battery cell 20 including an end cover assembly 21, a tab bracket 22, a fixing member 23, a housing 24, and an electrode assembly 25. The housing 24 has an opening. The end cover assembly 21 closes the opening of the housing 24. The electrode assembly 25 is provided in the housing 24 and provided with a tab 251. The tab bracket 22 is provided on a side of the end cover assembly 21 facing the electrode assembly 25, where the tab 251 is bent around the tab bracket 22. The fixing member 23 is configured to fix the tab bracket 22 to the end cover assembly 21.

The end cover assembly 21 refers to a component that covers an opening of the housing 24 to isolate an internal environment of the battery cell 20 from an external environment. For its specific arrangement method and shape, refer to the above description. The end cover assembly 21 may be an integral structure, or it may be formed by combining multiple layers, and the multi-layer structure forming the end cover assembly 21 may have a variety of different functions.

As for the tabs 251 formed by the portions of the anode electrode plate and the cathode electrode plate without active substances, to reduce the installation space inside the battery cell 20 and facilitate the assembling of the battery cell 20, the tabs 251 are typically bent, but the bent tabs 251 may be unstable inside the battery cell 20. The tab bracket 22 is disposed inside the battery cell 20 for fixing the bent tabs 251, that is, the tabs 251 are bent around the tab bracket 22, and the bent tabs 251 are supported by the tab bracket 22 for facilitating the shaping of the tabs 251 or for supporting the tabs 251.

Specifically, as described above, typically a sheet-like tab 251 is formed after the winding of the electrode assembly 25 is completed. To save installation space within the secondary battery, typically the tab 251 needs to be bent. For example, in an embodiment, the tab bracket 22 can be placed on one side of the tab 251, so that a portion of the tab 251 is bent around the tab bracket 22 and lapped above the tab bracket 22, a bent tab space is formed within the bent tab 251, and the tab bracket 22 is disposed within the bent tab space to support the bent tab 251. In other embodiments, the bent tab space may be formed with the aid of an external device, and then the tab bracket 22 is placed inside the bent tab space to support the bent tab 251.

The tab bracket 22 may be plate-like, block-like, or other structures, and its specific size and shape need to be set according to the bending degree of the tab 251 and the installation space of the bent tab 251, and are not limited in this application.

The fixing member 23 is capable of connecting the tab bracket 22 with the tab 251 fixed to the end cover assembly 21 of the battery cell 20, and after the end cover assembly 21 is connected to the tab bracket 22 through the fixing member 23, the tab bracket 22 is fixed relative to the end cover assembly 21, so that even if the battery cell 20 vibrates or is inverted, the tab bracket 22 does not move randomly inside the housing 24 but is fixed stably on the end cover assembly 21.

The fixing member 23 may be formed through a mechanical structure, adhesive bonding, or other methods. It can be understood that the fixing member 23 is provided in such a way that it does not significantly increase the volume of the battery cell 20, so as to ensure the compact structure of the battery cell 20.

With such arrangement, in the battery cell 20 provided in this application, the tab bracket 22 is fixed to the end cover assembly 21 of the battery cell 20. The fixing effect provided by the end cover assembly 21 pulling on the tab bracket 22 allows the tab bracket 22 to remain stable in the initial assembly position when the battery 100 is inverted or the battery 100 is subjected to stress. This prevents loosening or displacement of the tab bracket 22 inside the battery 100, and allows the tab bracket 22 to play the role of shaping and supporting the tab 251, thereby improving the safety performance and cycle life of the battery 100.

According to some embodiments of this application, referring to FIG. 3 and FIGs. 5 to 8, the end cover assembly 21 includes an end cover 211 and an adapter member 212, the end cover 211 has an electrode terminal 27 electrically connected to the tab 251, the adapter member 212 is provided between the end cover 211 and the tab bracket 22 and is configured to electrically interconnect the electrode terminal 27 and the tab 251, and the fixing member 23 is configured to fix the tab bracket 22 on the end cover 211.

At least a portion of the electrode terminal 27 is exposed outside the battery cell 20 to facilitate connection to other members (such as a busbar), so as to lead out electric energy generated by the electrode assembly 25 of the battery cell 20 through the tab 251 and the electrode terminal 27. The electrode terminal 27 may be a part of the end cover 211 or a separate member mounted on the end cover 211.

The electrode terminal 27 and the tab 251 are connected using an adapter member 212, instead of connected directly. This not only avoids the situation where the adapter member 212 is fused during short circuit, overcharging, or overdischarging of the electrode assembly 25 and thus interrupts the current transmission between the electrode terminal 27 and the tab 251, but also prevents damage to the battery 100 or burning of other components during short circuit, overcharging, or overdischarging of the electrode assembly 25, thus ensuring the use safety of the battery 100.

It can be understood that the adapter member 212 is provided inside the battery cell 20 and located between the electrode terminal 27 and the tab 251 for electrically connecting to the electrode terminal 27 and the tab 251. The adapter member 212 may be of a sheet-like structure, or folded to form a Z shape, so as to form electrical connection regions on the adapter member 212 for connecting to the tab 251 and the electrode terminal 27, respectively. The specific structural form of the adapter member 212 is not limited.

Specifically, the adapter member 212 may be an adapter sheet or an overcurrent protection sheet, or an aggregate of the adapter sheet and the overcurrent protection sheet, which is not limited in this application.

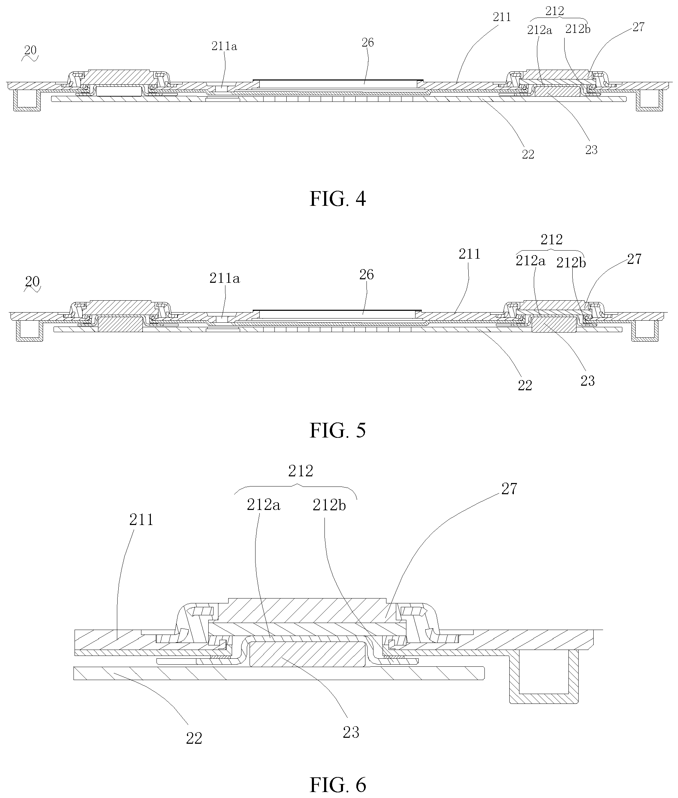

Further, referring to FIGs. 5 to 8, the tab bracket 22 and the adapter member 212 are connected through the fixing member 23. The fixing member 23 may be layered between the tab bracket 22 and the adapter member 212, or clamp or snap-fit the tab bracket 22 and the adapter member 212 together using an additional structure. The specific fixing shape of the fixing member 23 is not limited, and needs to match the actual shape of the adapter member 212. After the electrical connection of the adapter member 212 with the electrode assembly 25 and the tab 251 is ensured, fixing with the tab bracket 22 is achieved by utilizing other regions of the adapter member 212.

**In** this way, through arrangement of the adapter member 212, the safety of the battery cell 20 is improved. Additionally, the tab bracket 22 is fixed to the adapter member 212 through the fixing member 23, avoiding problems such as deformation of the tab 251 caused by displacement of the tab bracket 22 from affecting the electrical connection between the tab 251 and the electrode terminal 27.

According to some embodiments of this application, referring to FIGs. 5 to 8, the fixing member 23 is layered between the tab bracket 22 and the adapter member 212.

The two sides of the fixing member 23, which are back to back, are fixedly connected to the tab bracket 22 and the adapter member 212, respectively, so as to fixedly connect the tab bracket 22 and the adapter member 212. The fixing member 23 may be of an integral structure, or it may be formed by a plurality of modules spliced together, so as to connect the tab bracket 22 and the adapter member 212.

Moreover, the fixing member 23 is layered between the tab bracket 22 and the adapter member 212, to prevent the arrangement of the fixing member 23 from taking up space in other directions inside the battery cell 20. It is only necessary to consider increasing the thickness in the direction where the tab bracket 22 and the adapter member 212 are layered, achieving high space utilization and compact structure inside the battery cell 20.

According to some embodiments of this application, referring to FIGs. 4 to 8, the adapter member 212 includes a first adapter portion 212a and a second adapter portion 212b electrically connected to each other, where the first adapter portion 212a is configured to be electrically connected to the electrode terminal 27, the second adapter is configured to be electrically connected to the tab 251, and the fixing member 23 is provided between the first adapter portion 212a and the tab bracket 22 and/or between the second adapter portion 212b and the tab bracket 22.

The connection method of the first adapter portion 212a and the second adapter portion 212b is not limited. For example, an intermediate piece for electrical interconnection is provided between the first adapter portion 212a and the second adapter portion 212b, or the first adapter portion 212a is directly connected to the second adapter portion 212b. The shapes of the first adapter portion 212a and the second adapter portion 212b is not limited. A side of the first adapter portion 212a facing the electrode terminal 27 is connected to the electrode terminal 27, and a side of the second adapter portion 212b facing the tab 251 is connected to the bent tab 251, thus implementing the electrical interconnection function. It can be understood that the adapter member 212 needs to be made of a conductive metal member to achieve its electrical interconnection function.

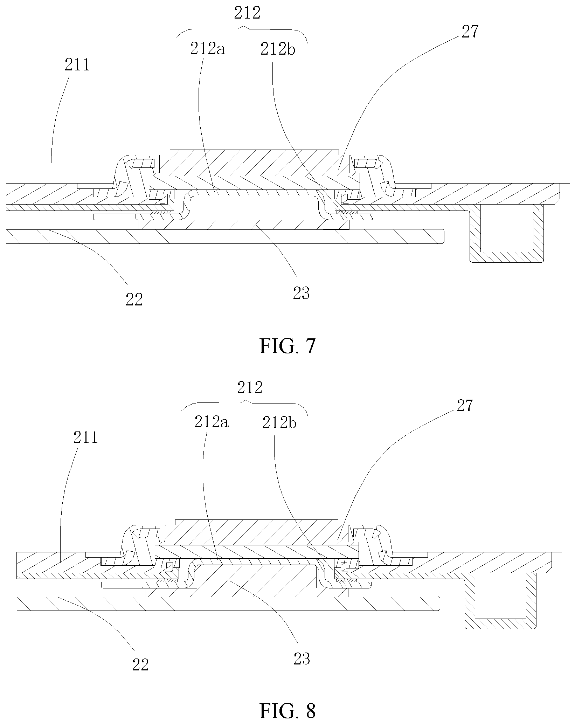

The fixing member 23 may be provided between the first adapter portion 212a and the tab bracket 22, for example, provided between the side of the first adapter portion 212a facing the tab bracket 22 and the tab bracket 22, as shown in FIG. 6. The fixing member 23 may alternatively be provided between the second adapter portion 212b and the second bracket. For example, as shown in FIG. 7, the side of the second adapter portion 212b facing the tab 251 is not only connected to the bent tab 251, but is also provided with a corresponding region to connect to the fixing member 23. In this case, the second adapter portion 212b is connected to the tab bracket 22 through the fixing member 23. Similarly, as shown in FIG. 8, the fixing member 23 may be provided between the first adapter portion 212a and the tab bracket 22, and between the second adapter portion 212b and the tab bracket 22.

In this way, the fixing member 23 can be arranged more flexibly according to the adapter structure of the adapter member 212, ensuring the interconnecting function of the adapter member 212 while stably fixing the tab bracket 22 to the adapter member 212.

According to some embodiments of this application, as shown in FIG. 3, the fixing member 23 is an adhesive layer.

The adhesive layer is a layer of adhesive that is formed after drying by applying, dispensing, or heat-sealing adhesive at a specified position. The area and thickness of the adhesive layer can be designed according to the actual situation.

Specifically, the thickness of the adhesive layer may be set to 0.05 millimeter (mm) to 7 mm. When the thickness of the adhesive layer is less than 0.05 mm, the adhesive layer is too thin with too little adhesive, resulting in a weak connection and fixation of the tab bracket 22. When the thickness of the adhesive layer is greater than 7 mm, the adhesive layer is too thick, occupying too much internal space of the battery cell 20, which not only affects the arrangement of the electrode assembly 25, but also may affect the normal bending of the tab 251.

With the adhesive layer provided, the tab bracket 22 can be adhered to the end cover assembly 21, improving the stability of the tab bracket 22. Moreover, the adhesive layer is a non-metallic member, and will not cause short circuit or the like with other electrical components, making the battery cell 20 much safer.

In other embodiments, the fixing member 23 may be a interlocking protrusion-groove structure, where one of the protrusion and the groove is connected to the tab bracket 22 and the other is connected to the adapter member 212. The fixing member 23 may alternatively be an elastic snap-fit structure, and its specific arrangement form is not limited.

According to some embodiments of this application, referring to FIG. 3, the adapter member 212 is welded to the electrode terminal 27, and an orthographic projection of the fixing member 23 on the adapter member 212 covers a welding position 212c between the adapter member 212 and the electrode terminal 27.

As described above, at least a portion of the electrode terminal 27 is exposed outside the battery cell 20 to facilitate connection to other members (such as a busbar), and at least part of another portion of the electrode terminal 27 is welded to the adapter member 212 so as to realize an electrical connection between the electrode terminal 27 and the tab 251.

Inevitably, during welding of the adapter member 212 and the electrode terminal 27, metal particles will fall off the welding position, and the metal particles will fall into the interior of the battery cell 20, which will leave the battery 100 at safety risk caused by short circuit.

The orthographic projection of the fixing member 23 on the adapter member 212 covers the welding position 212c of the adapter member 212 and the electrode terminal 27, so that any welding residue, such as metal particles, generated at the welding position 212c will first pass through the fixing member 23 before falling into the interior of the battery cell 20.

In this application, with the fixing member 23 provided between the tab bracket 22 and the adapter member 212, the side of the adapter member 212 away from the tab bracket 22 is welded to the electrode terminal 27, so that after metal particles are generated by the welding of the tab bracket 22 and the motor terminal, the metal particles falling toward the interior of the battery 100 first pass through the fixing member 23, and thus will be intercepted by the adhesive layer formed by the fixing member 23, preventing the metal particles from further falling into the interior of the battery 100.

Specifically, in practical operations, it is necessary to weld the electrode terminal 27 and dispose the fixing member 23 synchronously, or to dispose the adhesive layer of the fixing member 23 first, and then weld the electrode terminal 27 before drying is completed. This allows the welding residue to fall into the interior of the adhesive layer, which will then be sealed inside as the adhesive layer dries. This ensures that the welding residue will not continue to fall into the interior of the battery cell 20.

According to some embodiments of this application, referring to FIG. 3 and FIG. 5, the tab bracket 22 is provided with an accommodating hole 22a, and at least a portion of the adhesive layer is located within the accommodating hole 22a.

The accommodating hole 22a may extend through the tab bracket 22, or may not extend through the tab bracket 22. An adhesive material is placed into the accommodating hole 22a through coating, dispensing, heat sealing, or the like, and the adhesive layer formed after drying of the adhesive material is adhered to the hole wall of the accommodating hole 22a or the surface of the tab bracket 22 provided with the accommodating hole 22a, and also to the adapter member 212 provided on its upper layer.

In this way, the accommodating hole 22a provided in this application can appropriately increase the body volume (that is, the accommodating hole 22a on the tab bracket 22) for fixing the adhesive layer, and the adhesive layer is partially located inside the tab bracket 22. This reduces the thickness in the direction where the tab bracket 22 and the adapter member 212 are layered, thus reducing the internal space occupation of the battery cell 20, achieving high space utilization of the battery cell 20, and improving the wetting effect on the electrode plate.

Further, the number of accommodating holes 22a can be adjusted according to requirements, and each accommodating hole 22a is provided with an adhesive layer, which allows for more even force distribution on the tab bracket 22 and improves the fixation effect.

According to some embodiments of this application, an opening area of the accommodating hole 22a is denoted as A, area of the weld mark produced at the welding position 212c between the adapter member 212 and the electrode terminal 27 is denoted as B, and a ratio of A to B ranges from 1/2 to 2/3.

The area A of the accommodating hole 22a is smaller than the area B of the weld mark, and the area of the adhesive layer disposed in the accommodating hole 22a is larger than the weld mark area. In this case, the adhesive layer disposed inside the accommodating hole 22a partially overflows to outside the accommodating hole 22a and connects to one side surface of the tab bracket 22. This guarantees fixation of the tab bracket 22 and improves the wetting effect of the electrode plate without occupying too much internal space of the battery cell 20, thus ensuring sufficient space for the electrode assembly 25 and electrolyte inside the housing 24 to avoid reducing the energy density of the battery cell 20.

Specifically, the shape of the adhesive layer matches the shape of the accommodating hole 22a, the dispensing shape can be arbitrary, and the shape of the top bracket opening can arbitrary. While ensuring a certain area ratio, for example, the more similar shapes of the adhesive layer and the accommodating hole 22a allow for better fixation effect without increasing consumption of the adhesive layer.

According to some embodiments of this application, referring to FIG. 3, the end cover assembly 21 includes an end cover 211, where the end cover 211 has an electrode terminal 27 electrically connected to the tab 251, and the fixing member 23 is configured to fix the tab bracket 22 to the end cover 211 of the end cover assembly 21.

At least a portion of the electrode terminal 27 is exposed outside the battery cell 20 to facilitate connection to other members (such as a busbar), so as to lead out electric energy generated by the electrode assembly 25 of the battery cell 20 through the tab 251 and the electrode terminal 27. The electrode terminal 27 may be a part of the end cover 211 or a separate member mounted on the end cover 211.

Fixing the tab bracket 22 to the end cover 211 ensures the stability of the electrical connection between the tab 251 and the electrode terminal 27. Additionally, such arrangement ensures fixation of the tab bracket 22 through the end cover 211, avoiding problems such as deformation of the tab 251 caused by displacement of the tab bracket 22, as well as the resulting impact on the electrical connection between the tab 251 and the electrode terminal 27.

According to some embodiments of this application, the end cover assembly 21 includes an end cover 211 and an insulating member (not shown in the figure), where the end cover 211 is provided with an electrode terminal 27, the insulating member is provided between the end cover 211 and the tab 251, and the fixing member 23 is configured to fix the tab bracket 22 to the insulating member.

The insulating member is provided between the end cover 211 and the tab 251 of the electrode assembly 25 for isolating the region on the end cover 211 other than the electrode terminal 27 from other electrically connected parts, such as the tab 251, inside the battery cell 20 to reduce the risk of short circuit.

It can be understood that the insulating member is insulatingly connected to the end cover 211, and the fixing member 23 is connected to the insulating member so as to realize its connection with the end cover 211. This can avoid problems such as deformation of the tab 251 caused by displacement of the tab bracket 22, thus preventing the further impact on the electrical connection between the tab 251 and the electrode terminal 27. Additionally, such arrangement can prevent the end cover 211 with the electrode terminal 27 provided thereon from being directly connected to the tab bracket 22, thus reducing the risk of the fixing member 23 interfering with the electrode terminal 27.

According to some embodiments of this application, the fixing member 23 is an adhesive layer. Its specific arrangement method and thickness range have already been described above and will not be repeated herein.

According to another aspect of this application, a battery 100 is further provided, including the battery cell 20 in any of the above embodiments.

According to another aspect of this application, an electric device is further provided. The electric device includes the battery 100 according to any one of the foregoing embodiments, where the battery 100 is configured to supply electric energy; or includes the battery cell 20 in any of the above embodiments, where the battery cell 20 is configured to supply electric energy.

According to some embodiments of this application, this application provides a battery cell 20 including a housing 24, an electrode assembly 25, an end cover assembly 21, and a tab bracket 22, as shown in FIG. 3. The housing 24 has an opening at an end, the electrode assembly 25 is accommodated within the housing 24 and has a tab 251, and the end cover assembly 21 covers the opening. The end cover assembly 21 includes an end cover 211 and an adapter member 212. The electrode assembly 25 has a tab 251, and a bent portion of the tab 251 is connected to the tab bracket 22. A fixing member 23 is provided between the tab bracket 22 and the adapter member 212 so as to fixedly connect the tab bracket 22 and the end cover assembly 21. **In** this way, the fixing effect provided by the end cover assembly 21 pulling on the tab bracket 22 allows the tab bracket 22 to remain stable in the initial assembly position when the battery 100 is inverted or the battery 100 is subjected to stress. This prevents loosening or displacement of the tab bracket 22 inside the battery 100, and allows the tab bracket 22 to play the role of shaping and supporting the tab 251, thus improving the safety performance and cycle life of the battery 100.

Technical features in the foregoing embodiments may be combined in any way. For brevity of description, possible combinations of the technical features in the foregoing embodiments are not described all. However, as long as there is no contradiction among combinations of these technical features, all the combinations should be considered within a range recorded in this specification.

The foregoing embodiments only represent several implementations of this application, and descriptions thereof are specific and detailed, but should not be construed as a limitation on the scope of this application patent. It should be noted that those of ordinary skill in the art may further make several modifications and improvements without departing from the concept of this application, and these modifications and improvements also fall within the protection scope of this application. Therefore, the protection scope of this application should be subject to the appended claims.

## Claims

1. A battery cell, wherein the battery cell comprises:
a housing having an opening;
an end cover assembly closing the opening of the housing;
an electrode assembly provided with a tab and disposed within the housing;
a tab bracket, wherein the tab bracket is provided on a side of the end cover assembly facing the electrode assembly, and the tab is bent around the tab bracket; and
a fixing member, wherein the fixing member is configured to fix the tab bracket to the end cover assembly.

2. The battery cell according to claim 1, wherein the end cover assembly comprises:
an end cover, wherein the end cover has an electrode terminal electrically connected to the tab; and
an adapter member, wherein the adapter member is provided between the end cover and the tab bracket and configured to electrically interconnect the electrode terminal and the tab; and
the fixing member is configured to fix the tab bracket to the adapter member.

3. The battery cell according to claim 2, wherein the fixing member is provided between the tab bracket and the adapter member.

4. The battery cell according to claim 2 or 3, wherein the adapter member comprises a first adapter portion and a second adapter portion electrically connected to each other, wherein the first adapter portion is configured to be electrically connected to the electrode terminal, and the second adapter portion is configured to be electrically connected to the tab; and
the fixing member is provided between the first adapter portion and the tab bracket or the fixing member is provided between the second adapter portion and the tab bracket.

5. The battery cell according to claim 2 or 3, wherein the adapter member comprises a first adapter portion and a second adapter portion electrically connected to each other, wherein the first adapter portion is configured to be electrically connected to the electrode terminal, and the second adapter portion is configured to be electrically connected to the tab; and
the fixing member is provided between the first adapter portion and the tab bracket and the fixing member is provided between the second adapter portion and the tab bracket.

6. The battery cell according to any one of claims 1 to 5, wherein the fixing member is an adhesive layer.

7. The battery cell according to claim 6, wherein the adapter member is welded to the electrode terminal, and an orthographic projection of the fixing member on the adapter member covers a welding position between the adapter member and the electrode terminal.

8. The battery cell according to claim 6 or 7, wherein the tab bracket is provided with an accommodating hole, and at least a portion of the adhesive layer is located within the accommodating hole.

9. The battery cell according to claim 8, wherein an opening area of the accommodating hole is denoted as A, area of the weld mark produced at the welding position between the adapter member and the electrode terminal is denoted as B, and a ratio of A to B ranges from 1/2 to 2/3.

10. The battery cell according to claim 1, wherein the end cover assembly comprises an end cover, wherein the end cover has an electrode terminal electrically connected to the tab; and
the fixing member is configured to fix the tab bracket to the end cover of the end cover assembly.

11. The battery cell according to claim 1, wherein the end cover assembly comprises:
an end cover, wherein the end cover is provided with an electrode terminal; and
an insulating member, wherein the insulating member is provided between the end cover and the tab; and
the fixing member is configured to fix the tab bracket to the insulating member.

12. The battery cell according to claim 10 or 11, wherein the fixing member is an adhesive layer.

13. The battery cell according to any one of claims 6 to 9 and claim 12, wherein thickness of the adhesive layer ranges from 0.05 mm to 7 mm.

14. A battery, comprising the battery cell according to any one of claims 1 to 13.

15. An electric device, comprising the battery according to claim 14, wherein the battery is configured to supply electric energy.
